# FASCICULE DE BREVET EUROPEEN

(11) **EP 2 523 293 B1**
(45) Date de publication et mention de la délivrance du brevet: **30.04.2014**
(21) Numéro de dépôt: 12160717.0
(22) Date de dépôt: 22.03.2012
(51) Int. Cl.: H02H 7/20, H02H 9/02

(54) **Circuit de protection contre une surintensité**
Schutzschaltung gegen Überstrom
Circuit for protection against an overcurrent

(30) Priorité: 09.05.2011 FR 1153951
(43) Date de publication de la demande: 14.11.2012
(73) Titulaire: Atlantic Industrie, 85000 La Roche sur Yon (FR)
(72) Inventeur: Bony, Yves, 85170 Dompierre sur Yon (FR)
(74) Mandataire: Chaillot, Geneviève

(56) Documents cités:
- US-A- 3 931 577

## Description

L'invention concerne les cartes électroniques et porte en particulier sur un montage électronique permettant de protéger une connexion d'entrée utilisateur de carte électronique vis-à-vis d'éventuelles erreurs de branchement.

La présente invention vise donc à protéger électriquement l'entrée électronique d'une carte électronique.

De nombreuses cartes électroniques ne possèdent pas à l'heure actuelle de protection électrique sur leurs entrées.

Il existe cependant des solutions pour mettre en oeuvre une protection électrique d'une entrée électronique de carte électronique.

Une première solution consiste par exemple à mettre un fusible sur chaque entrée à protéger de la carte électronique.

Cette première solution protège efficacement l'entrée, mais présente l'inconvénient que le fusible doit être changé après chaque erreur de branchement de l'entrée ayant entraîné une surintensité qui a grillé le fusible.

Une deuxième solution consiste à utiliser des résistances non linéaires, par exemple dont la résistance varie avec la température (de type CTP ou CTN).

Cette deuxième solution présente un inconvénient lié au temps de réponse des résistances non linéaires qui est important. De plus, ces résistances non linéaires augmentent l'impédance d'entrée de la ligne d'entrée utilisateur que l'on souhaite protéger, alors que l'on souhaite conserver cette impédance à une valeur basse.

Une troisième solution consiste à utiliser des composants en silicium de type transistors, thyristors ou Igbt.

Cette troisième solution présente l'inconvénient de nécessiter un nombre important de composants supplémentaires pour pouvoir tenir compte d'une erreur sur la tension alternative d'entrée (230/440 vac).

En plus de ces solutions matérielles, il existe également des solutions logicielles pour les cartes équipées d'un microcontrôleur. L'inconvénient de cette solution logicielle est sa latence, liée au temps de démarrage du microcontrôleur.

La demande de brevet américain US 3931577 A décrit la protection d'un récepteur électronique à l'aide d'un circuit d'alimentation comprenant un triac.

Il n'existe donc pas à l'heure actuelle de solution satisfaisante pour protéger électriquement une entrée d'utilisateur sur une carte électronique, qui soit robuste, commode d'utilisation, qui n'ajoute que peu d'impédance à l'impédance d'entrée de la ligne d'entrée utilisateur que l'on souhaite protéger, avec un temps de réaction très faible, tout en ayant un coût très faible au regard du coût total de la carte afin de permettre une production à grande échelle.

La solution apportée par la présente invention résout les problèmes indiqués ci-dessus de l'état antérieur de la technique et est purement analogique, utilisant deux triacs.

Une source de tension alternative d'entrée type secteur génère, à partir de composants électroniques classiques, une tension continue. Cette tension continue générée attaque la gâchette d'un premier triac afin qu'en régime normal de fonctionnement, ce premier triac soit conducteur, et se laisse traverser par le courant alternatif issu de la source de tension alternative, la borne principale d'entrée de ce premier triac étant reliée à une phase de la source de tension alternative d'entrée par l'intermédiaire de la charge à protéger, qui peut être par exemple une entrée d'utilisateur sur une carte électronique ou un composant électronique.

L'autre borne principale du premier triac est connectée à une résistance d'ajustement du seuil d'erreur.

L'alimentation continue créée est également connectée à une borne principale du deuxième triac. La gâchette de ce deuxième triac est quant à elle connectée à la borne principale de sortie du premier triac.

En fonctionnement normal, le premier triac est conducteur, le courant alternatif provenant de la source de tension alternative le traversant, et est maintenu conducteur par la tension appliquée sur sa gâchette par la source de tension continue.

Le courant nominal qui traverse le premier triac en fonctionnement normal est insuffisant pour créer une tension « Seuil » aux bornes de la résistance d'ajustement de seuil d'erreur en sortie du premier triac, capable d'amorcer le deuxième triac par l'intermédiaire de sa gâchette reliée à la borne de sortie du premier triac.

Lorsqu'une erreur de branchement se produit sur la source de tension alternative d'entrée, un fort courant est amené à traverser le premier triac, ce courant étant suffisant pour créer une tension « Seuil » aux bornes de la résistance d'ajustement de seuil d'erreur en sortie du premier triac, capable d'amorcer le deuxième triac.

Une fois le deuxième triac amorcé, étant donné que sa borne principale d'entrée est connectée à une source de tension continue, le courant traversant le deuxième triac ne repasse par 0, et donc le deuxième triac est maintenu conducteur.

Le premier triac, quant à lui, en raison du fait que le deuxième triac est conducteur, n'est plus amorcé au niveau de sa gâchette, le courant issu de la source de tension continue traversant le deuxième triac, et le premier triac se bloque lors du passage par 0 du courant alternatif le traversant, issu de la source de tension alternative d'entrée.

Le premier triac assure ainsi une protection par annulation du courant.

Le principe de l'invention est donc de connecter deux triacs, un premier, en série avec les résistances nécessaires, en parallèle de la source de tension alternative d'entrée, la gâchette de ce premier triac étant commandée par une source de tension continue, et un deuxième, ayant sa borne principale d'entrée également connectée à la source de tension continue, et dont la gâchette est commandée par la borne principale de sortie du premier triac.

Une erreur de branchement bloque le premier triac, qui fournit alors une protection par annulation du courant.

Cette solution est très simple à mettre en oeuvre, peut être facilement produite en grande série, est peu coûteuse, et présente un temps de réaction très rapide.

Si un microcontrôleur est prévu, celui-ci pourra avantageusement être connecté à la borne principale d'entrée du deuxième triac pour annuler le courant le traversant et ainsi le bloquer.

On pourra aussi prévoir un circuit mémoire pour la mémorisation de l'erreur, consultable par le microcontrôleur.

Comme indiqué ci-dessus, cette invention mettant en oeuvre deux triacs est purement analogique et donc indépendante du fonctionnement d'un éventuel microcontrôleur.

La protection obtenue se maintient automatiquement, et est réarmable par simple coupure de l'alimentation ou par action volontaire d'un microcontrôleur qui gère le courant envoyé vers la gâchette du premier triac et la borne d'entrée du deuxième triac et qui peut ainsi faire des essais successifs afin de détecter automatiquement l'instant de la correction d'erreur.

Cette protection est utilisable durant toute la durée de vie du produit, et ne nécessite pas d'être changée comme le fusible.

De plus, la protection réagit rapidement, limitant les dissipations d'énergie liées aux erreurs, ce qui permet l'utilisation de composants électroniques standards de petite taille.

Elle permet de plus, lorsqu'un microcontrôleur est présent sur la carte électronique, de signaler facilement au microcontrôleur la présence d'erreurs, lequel microcontrôleur peut à son tour diffuser l'information et le traitement à apporter, par exemple sur un afficheur de type LCD en face avant d'un produit intégrant la protection.

Cette invention peut être notamment utilisée par tout concepteur de carte électronique qui souhaite protéger une entrée basse impédance sur courant alternatif.

Elle pourra notamment être utilisée par tout fabricant de systèmes domotiques (appareils de chauffage, gestionnaires d'énergie, délesteurs ...).

La présente invention a donc pour objet un circuit électronique de protection d'une charge alimentée par une source de tension alternative vis-à-vis d'une surintensité provenant de ladite source de tension alternative, caractérisé par le fait qu'il comprend :
- une connexion à la source de tension alternative ;
- une source de tension continue ;
- un premier triac, dont une première borne principale est reliée à la source de tension alternative par l'intermédiaire de la charge à protéger et dont la deuxième borne principale est connectée à la gâchette d'un deuxième triac et à une résistance d'ajustement de seuil d'erreur, la gâchette de ce premier triac étant connectée à la source de tension continue ;
- le deuxième triac, dont une première borne principale est connectée à la source de tension continue et dont la deuxième borne principale est connectée à la masse du circuit, la gâchette de ce deuxième triac étant connectée entre la deuxième borne principale du premier triac et la résistance d'ajustement du seuil de protection.

Comme indiqué plus haut, la charge à protéger vis-à-vis d'une surintensité peut être, par exemple, une entrée d'utilisateur sur une carte électronique ou un composant électronique

Selon une caractéristique particulière, le circuit de l'invention peut comprendre en outre un moyen permettant d'annuler le courant continu passant dans le deuxième triac une fois que celui-ci a été amorcé, afin de le faire passer à l'état bloqué.

On peut notamment, pour annuler le courant continu passant dans le deuxième triac, couper la source de tension continue. Plus généralement, lorsque cette source de tension continue dépend de l'alimentation générale du circuit, l'effet d'annulation du courant continu passant dans le deuxième triac peut être obtenu par coupure de l'alimentation électrique du circuit.

Selon une autre caractéristique particulière, le circuit de l'invention peut comprendre des éléments permettant de générer une tension continue à partir de la tension alternative fournie par la source de tension alternative, lesdits éléments formant ladite source de tension continue.

Le circuit électronique peut également comprendre en outre un microcontrôleur, dont une sortie constitue la source de tension continue alimentant la première borne principale du deuxième triac et la gâchette du premier triac.

Le microcontrôleur peut donc être utilisé pour annuler le courant circulant dans le deuxième triac, une fois celui-ci amorcé.

Le circuit électronique peut également comprendre en outre des éléments de détection permettant de détecter électriquement la surintensité, lesdits éléments de détection étant le cas échéant connectés au microcontrôleur afin de signaler au microcontrôleur l'occurrence d'une surintensité.

Ces éléments de détection peuvent également être connectés à tout dispositif de mesure ou de visualisation, type oscilloscope ou ordinateur, afin de permettre à un utilisateur de visualiser la surintensité, et le cas échéant d'enregistrer l'instant de l'occurrence de la surintensité.

Le circuit électronique peut également comprendre en outre un afficheur LCD connecté au microcontrôleur, ledit microcontrôleur exécutant un programme lors de la détection d'une occurrence d'une surintensité qui affiche un message à l'utilisateur du circuit pour lui signaler l'occurrence d'une surintensité et/ou un traitement à effectuer pour corriger la surintensité.

Un ensemble de deux diodes connectées en antiparallèle (tête-bêche) peut être connecté en série entre la deuxième borne principale du premier triac et la connexion entre la gâchette du deuxième triac et la résistance d'ajustement de seuil d'erreur pour augmenter la robustesse du système et garantir son fonctionnement, en particulier le blocage du premier triac par le deuxième triac, quelles que soient les dispersions de fabrication entre le premier triac et le deuxième triac.

Pour mieux illustrer l'objet de la présente invention, on va en décrire ci-après un mode de réalisation particulier avec référence aux dessins annexés.

Sur ce dessin :
- la Figure 1 est un schéma de circuit d'un circuit électronique selon la présente invention ; et
- la Figure 2 est un schéma de circuit d'un circuit électronique selon une variante de la présente invention, avec un microcontrôleur.

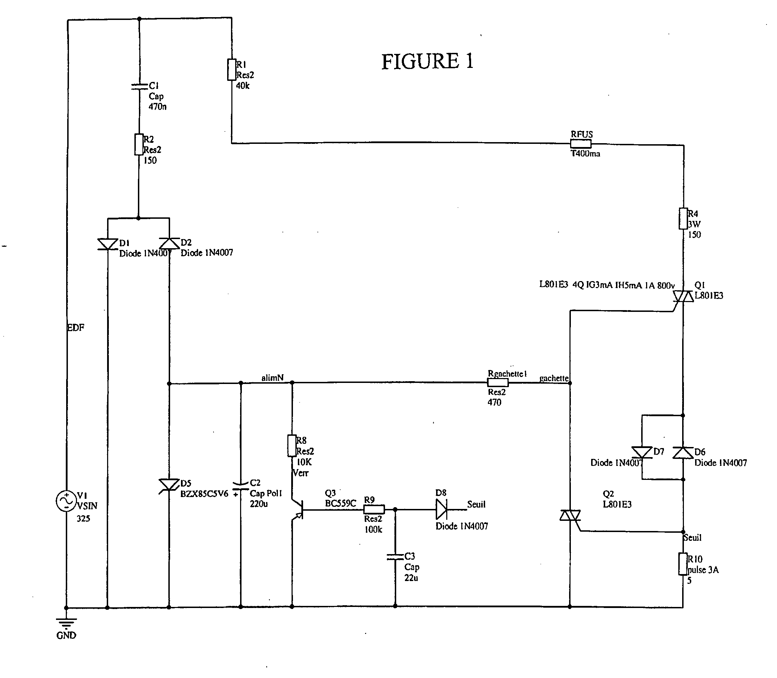

On va maintenant décrire un mode de réalisation de l'invention, en liaison avec le schéma de circuit de la Figure 1 ci-dessous, représentant un mode de réalisation de l'invention.

Les condensateurs C1, C2, la résistance R2, les diodes D1, D2 et la diode Zéner D5 génèrent une source de tension continue alimN, à partir de la source de tension alternative V1 (type réseau électrique du secteur par exemple).

Le condensateur C2 est chargé lors de chaque alternance négative de la tension alternative d'entrée fournie par V1, la diode Zéner D5, en mode avalanche, fournissant alors une tension constante aux bornes de C2.

Le condensateur C3, les résistances R8 et R9, la diode D8 et le transistor bipolaire PNP Q3 forment un circuit permettant de signaler l'erreur de branchement générant une surintensité. Cette erreur est consultable par la lecture du niveau Verr, par exemple grâce à une entrée d'un microcontrôleur (non représenté dans cette variante).

En parallèle de la source de tension alternative V1 sont connectés en série respectivement les résistances R1, Rfus, R4 et la première borne principale du premier triac Q1.

La deuxième borne principale de Q1 est connectée à deux diodes D6 et D7, montées en antiparallèle, puis à une résistante R10 d'ajustement du seuil d'erreur, montée en série avec les deux diodes D6 et D7 montées en antiparallèle.

Les diodes D6 et D7 assemblées tête-bêche (ou en antiparallèle) permettent de créer une chute de tension constante de +/-0,6V en fonction de l'alternance de la tension délivrée par la source de tension alternative V1.

En effet, la tension aux bornes de Q2 à l'état passant de Q2 est du même ordre de grandeur que la tension de gâchette de Q1.

Aussi pour garantir avec une grande robustesse le blocage de Q1 par Q2, on insère D6 et D7 en série sur la deuxième borne principale de Q1.

On a ainsi toujours la tension aux bornes de Q2 à l'état passant inférieure strictement à la tension de gâchette de Q1 plus la tension aux bornes de D6/D7. On garantit ainsi un blocage de Q1 par Q2.

R4 représente la charge à protéger d'une surintensité, et peut par exemple être une entrée d'utilisateur sur une carte électronique.

Q1 est ainsi en parallèle de la source de tension alternative d'entrée V1.

La gâchette de Q1 est commandée par la source de tension continue alimN à travers la résistance Rgachette1.

La source de tension continue alimN est également reliée à travers la résistance Rgachette1 à une première borne principale d'un deuxième triac Q2, dont la gâchette est commandée par la deuxième borne principale du premier triac Q1.

En fonctionnement normal, la source de tension continue alimN fournit un courant à travers Rgachette1, ce courant provoquant l'amorçage du premier triac Q1. Le courant nominal (quelques milliampères) traversant R1, Rfus, R4, Q1, D6, D7 et R10 est de faible valeur, ce qui entraîne une tension « Seuil » (aux bornes de la résistance R10) inférieure à la tension de commande du triac Q2, qui reste donc bloqué.

En cas d'erreur de branchement, la tension injectée sur le potentiel reliant R1 et Rfus par rapport à la masse est forte (par exemple équivalente à une phase de la source de tension alternative d'entrée). Cette tension injectée entraîne un fort courant (par exemple, supérieur à l'ampère) qui élève la tension « Seuil » aux bornes de la résistance R10 à un niveau supérieur à la valeur de déclenchement du deuxième triac Q2.

La tension développée aux bornes de Q2 amorcé étant inférieure à la tension aux bornes du triac Q1 ajoutée à la tension aux bornes de D6 et D7, Q1 se bloque au passage à zéro de son courant principal. Q1 bloqué réalise ainsi la protection par annulation de courant circulant dans la charge R4.

La tension alimN étant continue sans passage par zéro, elle n'autorise pas Q2 à se bloquer, ce qui fait office de mémoire et maintient la protection.

La remise en service du système est obtenue par l'annulation du courant dans Rgachette1 par coupure de l'alimentation, ce qui entraîne l'annulation du courant principal traversant Q2 et donc son blocage puisque, le triac Q1 étant bloqué, la gâchette de Q2 n'est plus commandée, ce qui fait qu'un passage par 0 du courant traversant Q2 le bloque.

Le courant dans Rgachette1 est ensuite remis pour amorcer Q1, et le circuit reprend son fonctionnement normal.

Le niveau de courant de déclenchement de la protection peut facilement être ajusté par la valeur de la résistance R10.

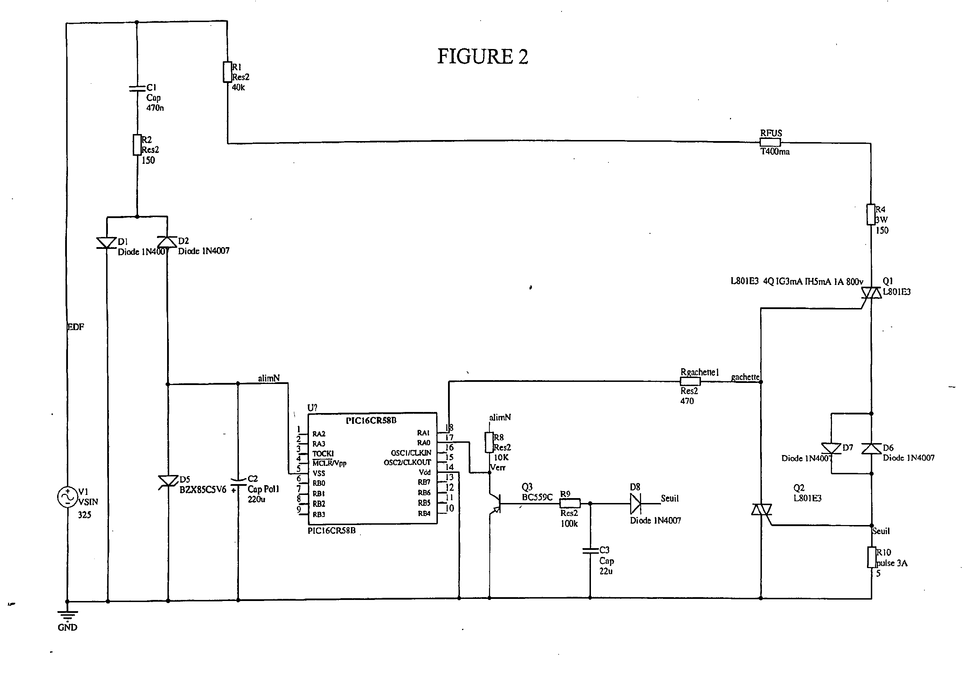

La Figure 2 représente une variante du schéma de circuit de la Figure 1, dans laquelle un microcontrôleur U1 est intégré.

Le fonctionnement de cette variante est identique au fonctionnement du schéma de circuit de la Figure 1, une borne (RA1) du microcontrôleur U1 commandant le courant injecté dans Rgachette1, une autre borne (RA0) du microcontrôleur U1 étant utilisée pour lire la tension Verr, qui permet de détecter un événement de surintensité.

U1, par commande du courant injecté dans Rgachette1, amorce dans un premier temps Q1, puis, lors d'un événement de surintensité, permet de désamorcer Q2 sans avoir à couper l'alimentation du circuit comme dans le cas de la Figure 1.

## Revendications

1. Circuit électronique de protection d'une charge (R4) alimentée par une source de tension alternative (V1) vis-à-vis d'une surintensité provenant de ladite source de tension alternative (V1), ledit circuit électronique de protection comprenant un premier triac (Q1) et une connexion à la source de tension alternative (V1), **caractérisé par le fait qu'**il comprend en outre une source de tension continue,
- une première borne principale du premier triac (Q1) étant reliée à la source de tension alternative (V1) par l'intermédiaire de la charge (R4) à protéger et la deuxième borne principale du premier triac (Q1) étant connectée à la gâchette d'un deuxième triac (Q2) et à une résistance (R10) d'ajustement de seuil d'erreur, la gâchette du triac premier (Q1) étant connectée à la source de tension continue ;
- une première borne principale du deuxième triac (Q2) étant connectée à la source de tension continue et la deuxième borne principale du deuxième triac (Q2) étant connectée à la masse du circuit, la gâchette de ce deuxième triac (Q2) étant connectée entre la deuxième borne principale du premier triac (Q1) et la résistance d'ajustement du seuil de protection (R10).

2. Circuit électronique selon la revendication 1, **caractérisé par le fait qu'**il comprend en outre un moyen permettant d'annuler le courant continu passant dans le deuxième triac (Q2) une fois que celui-ci a été amorcé, afin de le faire passer à l'état bloqué.

3. Circuit électronique selon l'une des revendications 1 et 2, **caractérisé par le fait qu'**il comprend des éléments (C1, R2, D1, D2, D5, C2) permettant de générer une tension continue à partir de la tension alternative fournie par la source de tension alternative (V1), lesdits éléments (C1, R2, D1, D2, D5, C2) formant ladite source de tension continue.

4. Circuit électronique selon la revendication 1, **caractérisé par le fait qu'**il comprend en outre un microcontrôleur (U1), dont une sortie constitue la source de tension continue alimentant la première borne principale du deuxième triac (Q2) et la gâchette du premier triac (Q1).

5. Circuit électronique selon l'une des revendications 1 à 3, **caractérisé par le fait qu'**il comprend en outre des éléments de détection (Q3, R8, R9, C3, D8) permettant de détecter électriquement la surintensité.

6. Circuit électronique selon la revendication 4, **caractérisé par le fait qu'**il comprend en outre des éléments de détection (Q3, R8, R9, C3, D8) permettant de détecter électriquement la surintensité, lesdits éléments de détection (Q3, R8, R9, C3, D8) étant connectés au microcontrôleur (U1) afin de signaler au microcontrôleur (U1) l'occurrence d'une surintensité.

7. Circuit électronique selon l'une des revendications 4 et 6, **caractérisé par le fait qu'**il comprend en outre un afficheur LCD connecté au microcontrôleur (U1), ledit microcontrôleur (U1) exécutant un programme lors de la détection d'une occurrence d'une surintensité qui affiche un message à l'utilisateur du circuit pour lui signaler l'occurrence d'une surintensité et/ou un traitement à effectuer pour corriger la surintensité.

8. Circuit électronique selon l'une des revendications 4 à 7, **caractérisé par le fait qu'**un ensemble de deux diodes (D6, D7) connectées en anti-parallèle est connecté en série entre la deuxième borne principale du premier triac (Q1) et la connexion entre la gâchette du deuxième triac (Q2) et la résistance (R10) d'ajustement de seuil d'erreur.

## Patentansprüche

1. Elektronische Schaltung zum Schutz einer von einer Wechselspannungsquelle (V1) versorgten Last (R4) vor einem Überstrom von der Wechselspannungsquelle (V1), wobei die elektronische Schutzschaltung zum Schutz eines ersten Triac (Q1) und einen Anschluss an der Wechselspannungsquelle (V1) umfasst, **dadurch gekennzeichnet, dass** er zusätzlich eine Gleichspannungsquelle umfasst,
- wobei eine erste Hauptelektrode des ersten Triac (Q1) mit der Wechselspannungsquelle (V1) über die zu schützende Last (R4) verbunden ist und die zweite Hauptelektrode des ersten Triac (Q1) an der Steuerelektrode eines zweiten Triac (Q2) und an einem Widerstand (R10) zur Anpassung der Fehlerschwelle angeschlossen ist, wobei die Steuerelektrode des ersten Triac (Q1) an der Gleichspannungsquelle angeschlossen ist;
- wobei eine erste Hauptelektrode des zweiten Triac (Q2) an der Gleichspannungsquelle angeschlossen ist und die zweite Hauptelektrode des zweiten Triac (Q2) an der Masse der Schaltung angeschlossen ist, wobei die Steuerelektrode des zweiten Triac (Q2) zwischen der zweiten Hauptelektrode des ersten Triac (Q1) und dem Widerstand zur Anpassung der Schutzschwelle (R10) angeschlossen ist.

2. Elektronische Schaltung nach Anspruch 1, **dadurch gekennzeichnet, dass** sie zusätzlich ein Mittel umfasst, das ein Aufheben des im zweiten Triac (Q2) fließenden Gleichstroms ermöglicht, sobald dieser ausgelöst ist, um diesen in blockierten Zustand zu versetzen.

3. Elektronische Schaltung nach einem der Ansprüche 1 und 2, **dadurch gekennzeichnet, dass** sie Elemente (C1, R2, D1, D2, D5, C2) umfasst, die es ermöglichen, eine Gleichspannung aus der von der Wechselspannungsquelle (V1) gelieferten Wechselspannung zu erzeugen, wobei die Elemente (C1, R2, D1, D2, D5, C2) die Gleichspannungsquelle bilden.

4. Elektronische Schaltung nach Anspruch 1, **dadurch gekennzeichnet, dass** sie zusätzlich eine Mikroprozessorsteuerung (U1) umfasst, von der ein Ausgang die Gleichspannungsquelle zur Versorgung der ersten Hauptelektrode des zweiten Triac (Q2) und der Steuerelektrode des ersten Triac (Q1) darstellt.

5. Elektronische Schaltung nach einem der Ansprüche 1 bis 3, **dadurch gekennzeichnet, dass** sie zusätzlich Erkennungselemente (Q3, R8, R9, C3, D8) umfasst, die ein elektrisches Erkennen des Überstroms ermöglichen.

6. Elektronische Schaltung nach Anspruch 4, **dadurch gekennzeichnet, dass** sie zusätzlich Erkennungselemente (Q3, R8, R9, C3, D8) umfasst, die ein elektrisches Erkennen des Überstroms ermöglichen, wobei die Erkennungselemente (Q3, R8, R9, C3, D8) an die Mikroprozessorsteuerung (U1) angeschlossen sind, um der Mikroprozessorsteuerung (U1) das Auftreten eines Überstroms zu signalisieren.

7. Elektronische Schaltung nach einem der Ansprüche 4 und 6, **dadurch gekennzeichnet, dass** sie zusätzliche eine an die Mikroprozessorsteuerung (U1) angeschlossene LCD-Anzeige umfasst, wobei die Mikroprozessorsteuerung (U1) bei Erkennen des Auftretens eines Überstroms ein Programm ausführt, das dem Benutzer der Schaltung eine Meldung anzeigt, um diesen das Auftreten eines Überstroms und/oder eine durchzuführende Maßnahme zum Beheben des Überstroms zu signalisieren.

8. Elektronische Schaltung nach einem der Ansprüche 4 bis 7, **dadurch gekennzeichnet, dass** eine Gesamtheit aus zwei Dioden (D6, D7) in Gegenparallelschaltung in Reihe zwischen der ersten Hauptelektrode des ersten Triac (Q1) und dem Anschluss zwischen der Steuerelektrode des zweiten Triac (Q2) und dem Widerstand (R10) zur Anpassung der Fehlerschwelle angeschlossen ist.

## Claims

1. Protection electronic circuit to protect a load (R4) powered by an alternating current voltage source (V1) from an overcurrent of said alternating current voltage source (V1), said protection electronic circuit comprising a first triac (Q1) and a connection to the alternating current voltage source (V1), **characterized by** the fact that it further comprises a direct current voltage source,
- a first main terminal of the first triac (Q1) being connected to the alternating current voltage source (V1) by the load (R4) to be protected and the second main terminal of the first triac (Q1) being connected to the gate of a second triac (Q2) and to an error threshold adjustment resistor (R10), the gate of the first triac (Q1) being connected to the direct current voltage source ;
- a first main terminal of the second triac (Q2) being connected to the direct current voltage source and the second main terminal of the second triac (Q2) being connected to the ground of the circuit, the gate of this second triac (Q2) being connected between the second main terminal of the first triac (Q1) and the protection threshold adjustment resistor (R10).

2. Electronic circuit according to claim 1, **characterized by** the fact that it further comprises means to cancel the direct current flowing in the second triac (Q2) once it has been triggered, so as to turn it off.

3. Electronic circuit according to anyone of claims 1 or 2, **characterized by** the fact that it further comprises elements (C1, R2, D1, D2, D5, C2) to generate a direct current voltage from the alternating current voltage provided by the alternating current voltage source (V1), said elements (C1, R2, D1, D2, D5, C2) forming said direct current voltage source.

4. Electronic circuit according to claim 1, **characterized by** the fact that it further comprises a microcontroller (U1), an output of which constitutes the direct current voltage source powering the first main terminal of the second triac (Q2) and the gate of the first triac (Q1).

5. Electronic circuit according to anyone of claims 1 to 3, **characterized by** the fact that it further comprises detection elements (Q3, R8, R9, C3, D8) to electrically detect the overcurrent.

6. Electronic circuit according to claim 4, **characterized by** the fact that it further comprises detection elements (Q3, R8, R9, C3, D8) to electrically detect the overcurrent, said detection elements (Q3, R8, R9, C3, D8) being connected to the microcontroller (U1) so as to signal the occurrence of an overcurrent to the microcontroller.

7. Electronic circuit according to anyone of claims 4 and 6, **characterized by** the fact that it further comprises a LCD display connected to the microcontroller (U1), said microcontroller (U1) executing a program during the detection of an occurrence of an overcurrent which displays a message to the user of the circuit to signal him the occurrence of an overcurrent and/or a processing to be performed to correct the overcurrent.

8. Electronic circuit according to anyone of claims 4 to 7, **characterized by** the fact that a set of two diodes (D6, D7) connected in anti-parallel is connected in series between the second main terminal of the first triac (Q1) and the connection between the gate of the second triac (Q2) and the error threshold adjustment resistor (R10).
